# EUROPEAN PATENT APPLICATION

(11) **EP 3 407 120 A1**
(43) Date of publication of application: **28.11.2018**
(21) Application number: 17172665.6
(22) Date of filing: 24.05.2017
(51) Int. Cl.: G02C 11/00, G02C 7/08, G02C 7/10

(54) **ACTIVATION AND INTERACTION METHOD OF ELECTRONIC EYEGLASSES**

(71) Applicant: Sihto N.V., 9052 Zwijnaarde (BE)
(72) Inventor: De Smet, Jelle, 9300 Aalst (BE); Marchal, Paul Wilfried Cecile, 9000 Gent (BE); Cosemans, Johan Ludo Louis, 3221 Holsbeek (BE)
(74) Representative: Philippaerts, Yannick

(57) **Abstract**

The invention relates to glasses comprising an ophthalmic frame for holding a pair of lenses, the ophthalmic frame comprising two sets of electronical components, each set being connected to a closest lens of the pair of lenses to switch at least a part of the respective lens at least from a first state to a second state, characterized in that the ophthalmic frame further comprises two motion sensors, each motion sensor being connected to a respective set of electronical components, wherein the electronical components and motion sensors are configured to execute said switch based on a predetermined motion of said ophthalmic frame detected by said motion sensors.

## Description

The invention relates to glasses comprising an ophthalmic frame for holding a pair of lenses, the ophthalmic frame comprising two sets of electronical components, each set being connected to a closest lens of the pair of lenses to switch at least a part of the respective lens at least from a first state to a second state.

European patent application with number EP 2 562 593 A1 describes an electronic eyeglasses including an eyeglass frame, end pieces, hinges, temples, a bridge, nose pads, and a pair of edged lenses mounted into the eyeglasses frame. The end piece contains spring connectors for electrically connecting a liquid lens structure contained in the edged lens, a voltage supply including a battery as a power supply connected to the spring connectors, a DIP switch, etc. The electronic glasses can be operated as bifocals whose focal length can be switched as desired by the DIP switch.

A disadvantage of the eyeglasses described in EP 2 562 593 A1 is that the two lenses are switched by separate DIP switches. As a result of that, switching the focal length of the two lenses may not occur simultaneously, which may be disadvantageous for a person wearing the glasses and seeing through lenses with a different focal length for a certain period of time.

It may be an object of the invention to provide a solution to the above stated problem. In particular it may be an object of the invention to provide glasses of the type described in the preamble in which said at least parts of the two lenses of the pair of lenses may be switched substantially simultaneously.

Any of the above stated objects or any other object may be achieved by glasses of the type described in the preamble, that are characterized in that the ophthalmic frame further comprises two motion sensors, each motion sensor being connected to a respective set of electronical components, wherein the electronical components and motion sensors are configured to execute said switch based on a predetermined motion of said ophthalmic frame detected by said motion sensors.

A motion of said ophthalmic frame may be detected by the two motion sensors at substantially the same moment in time, i.e. substantially without delay, i.e. substantially simultaneously. If a motion detected by the two sensors corresponds to a said predetermined motion, said electronical components are arranged to switch the respective lens at least from a first state to a second state. This way, the two lenses may be switched substantially simultaneously.

An advantage of using said two motion sensors for triggering said switch is that no connection, either physical or wireless, has to be provided between the two sets of electronical components. An advantage of no connection is that the ophthalmic frame does not need to be adapted to provide such a connection. In other words, the two sets of electronical components are arranged to switch said at least part of the lens independent of each other, although substantially simultaneously as a result of said motion sensors.

The two motion sensors are mechanically linked to each other via said ophthalmic frame, at least in use of the glasses. As such, any motion of said ophthalmic frame may result in a substantially simultaneous motion of both motion sensors and may therefor be detected by both motion sensors substantially simultaneously. For example, an external force acted on said frame at substantially one point or area of said frame may result in the whole frame being moved, such that both motion sensors may sense said movement.

Said ophthalmic frame, or at least a part thereof that provides at least a part of the mechanically linkage between the two motion sensors, is preferably relatively stiff and/or relatively rigid and/or relatively incompressible, in particular preferably at least in a direction of a frame part extending between the two motion sensors. In other words, at least in use of the glasses, a distance between said two motion sensors is preferably substantially fixed, in particular preferably at least as seen or measured along the frame part extending between the two motion sensors. Such an ophthalmic frame may provide that said two motion sensors undergo a motion substantially simultaneously.

Said ophthalmic frame, or at least the part thereof that provides said at least part of the mechanically linkage between the two motion sensors, is preferably at least partly made of a material that is preferably relatively stiff and/or relatively rigid and/or relatively incompressible, in particular preferably at least in a direction of the frame part extending between the two motion sensors. For example, said material may have a Young's modulus that is chosen to be at least 0,1 GPA, preferably at least 0,2 GPA, more preferably at least 0,5 GPA. For example said material may be chosen from the group comprising plastic, such as for example cellulose acetate, cellulose acetate propionate or nylon, metal, such as for example monel, titanium, betatitanium, beryllium, steel, stainless steel, flexon, aluminum, gold or silver, wood, bone, stone and horn, or any combination thereof. It is noted that said ophthalmic frame may optionally be made of more than one, different materials.

For example, at least a bridge of said ophthalmic frame may be relatively stiff and/or relatively rigid and/or relatively incompressible, in particular preferably at least in a direction extending between the two lenses, and/or may be made of a said above described material.

For example, at least a part of the frame extending between two temples of the frame may be relatively stiff and/or relatively rigid and/or relatively incompressible, in particular preferably at least in a direction parallel to a surface direction of the two lenses, and/or may be made of a said above described material.

Said surface direction of the two lenses may be defined throughout this text and claims as being substantially parallel to the plane or surface of the lenses, in the direction of the other lens. The surface direction may for example be substantially parallel to a longitudinal direction of a bridge of the glasses.

The first state and second state may be any desired state. Said first state and second states are in particular different states. For example, said first state may be a state in which the lenses are uncolored and said second state may be a state in which the lenses are colored. As an alternative, for example, said first state may be a state in which the lenses or said part thereof have a first refractive index and said second state may be a state in which the lenses or said part thereof have a second refractive index, different from the first refractive index. Said first refractive index may for example be chosen such that in the first state said lenses may be used for distance viewing, while the second refractive index may for example be chosen such that in the second state said lenses may be used for near viewing. Such glasses may in particular be suitable for patients suffering from presbyopia.

Said predetermined motion of said ophthalmic frame may be any suitable, predefined motion or motion range. The predetermined motion is thus to be understood throughout this text and claims as either one predetermined motion or a predetermined motion range comprising a range of predetermined motions.

As the motion sensors are provided at a distance from each other, i.e. at different parts of the frame, the predetermined motion of the ophthalmic frame may be sensed differently, similarly, or the same by the two motion sensors, dependent on the type of motion of the frame. Preferably, said predetermined motion is chosen to be a motion that is sensed similarly or the same by both motion sensors. For example, said predetermined motion may be a rotational and/or translational motion of said ophthalmic frame or said predetermined motion may have a rotational and/or translational component.

Preferably, said predetermined motion is chosen to be a motion that is different from a normal motion of said ophthalmic frame, said normal motion being for example a motion of said ophthalmic frame when a person wearing said ophthalmic frame moves his head.

For example, said predetermined motion may be a motion that occurs during a relatively short period of time and/or occurs relatively fast, i.e. has relatively high acceleration, and/or with a relatively short distance. For example, said predetermined motion may occur within 1 second, preferably within half a second, more preferably within tens of milliseconds. For example, said predetermined motion may have a positive or negative acceleration that is minimally 0,1 g, preferably minimally 0,2 g, even more preferably minimally 0,3 g, even more preferably minimally 0,4 g, even more preferably minimally 0,5 g and/or that is maximally 1 g, preferably maximally 0,9 g, even more preferably maximally 0,8 g, even more preferably maximally 0,7 g, even more preferably maximally 0,6 g. For example, said predetermined motion may have a traveling distance that is maximally 2 cm, preferably maximally 1 cm, even more preferably maximally 0,5 cm, even more preferably maximally 0,2 cm and/or that is minimally 0,01 cm, preferably minimally 0,05 cm, even more preferably minimally 0,1 cm.

For example, said predetermined motion may be motion in two, substantially opposite directions, in which the ophthalmic frame moves back and forth, at least once. Such a motion may for example occur if a force is acted on one side of the ophthalmic frame, wherein the ophthalmic frame first moves in the direction of the force acted thereon and then bounces back.

For example, said predetermined motion may be a predetermined motion pattern. Such a pattern may comprise a repetition of optionally similar motions, in which a optionally similar motion is for example repeated two times, three times, four times or more, in particular within a certain time period, such as for example within 2 two second, preferably within 1 second, preferably within 0,5 second. Said certain time period may be adapted to the number of repetitions of the optionally similar motion, in which certain time period may be choses to be shorter when the number of repetitions is lower and vice versa.

Said predetermined motion may in particular be chosen to be a so-called single tap, double tap, triple tap or any higher number tap. Such a single tap, double tap or triple tap is accurately distinguishable from normal motion and may therefor be a suitable motion to be sensed by said motion sensors to trigger said switch. Said single, double or triple tap may for example be applied to said glasses by one or more fingers or by a hand of a person wearing said glasses. Said single, double or triple tap may for example be applied to one point or area of said glasses. Said one point or area may be located at one out of two sides of the glasses, said two sides being for example defined at opposite sides of the two lenses, i.e. such that both lenses extend between the two sides as seen in a surface direction of the lenses. Such one point or area may for example be a part of a temple of the frame or part of an end piece of said frame to which said temple is connected. In such an embodiment the single, double or triple tap is preferably applied substantially parallel to the surface direction of the lenses substantially in the direction of the other side. Alternatively said one point or area may be a central area between said two sides, for example a bridge area of said frame. In such an embodiment the single, double or triple tap is preferably applied substantially orthogonal to the surface direction of the lenses. It is noted that any number of taps may be used, in particular also higher number taps, but that a single, double or triple tap is particularly suitable as it is less prone to errors in keeping track of the number of taps by a user.

It is noted that the single, double or triple tap may be applied differently by different persons or by a same person at different times. The motion sensors may be arranged such that within a certain range these different single, double or triple taps are recognized as single, double and triple taps and thus as the predetermined motion. This range may for example require a time limit in which the two taps need to be performed, said time limit being for example maximally 3 seconds, preferably maximally 2 seconds, even more preferably maximally 1 second.

Said motion sensor may be any suitable type of motion sensor. For example, said motion sensor may be an accelerometer or gyroscope. In particular an accelerometer may be advantageous as it is able to detect a motion that occurs during a relatively short period of time and/or occurs relatively fast, i.e. has relatively high acceleration, and/or with a relatively short distance. In particular said accelerometer may be a suitable sensor when said predetermined motion is chosen to be a double or triple tap.

In an embodiment of said glasses according to the invention said ophthalmic frame further comprises two voltage sources, each being assigned to a respective set of electronical components, wherein each of said lenses comprises at least one of a liquid crystal lens structure, an electro fluidic membrane and an electrochromic lens structure, connected to a respective voltage source, and wherein said first state is a state in which no voltage is applied to said at least one of the liquid crystal lens structure, the electro fluidic membrane and the electrochromic lens structure of the respective lens. Such a first state may be seen as a rest state because no voltage is applied to said at least one of the liquid crystal lens structure, the electro fluidic membrane and the electrochromic lens structure in the first state. If a liquid crystal lens structure is provided the first state and second state may involve different refractive indices for said at least part of the lenses, as described above. If an electro fluidic membrane is provided the first state and second state may involve a different focus for said at least part of the lenses. If an electrochromic lens structure is provided the first state and second state may involve different colors, as is described above. The voltage source may be any suitable type of voltage source, such as for example a battery.

In another embodiment of said glasses said electronical components are arranged to switch said at least part of the respective lens back from the second state to the first state. I.e., in such an embodiment each set of electronical components is arranged to switch said at least part of the respective lens vice versa between the first state and the second state.

Triggering said electronical components to switch said at least part of the respective lens back to the first state may for example be provided by said motion sensors detecting a second predetermined motion, either being the same as, similar to or different from said predetermined motion. For clarity, said predetermined motion may also be referred to as the first predetermined motion.

Said second predetermined motion may be any suitable, pre-defined motion, for example comprising any one or more of the features described above with respect to the first predetermined motion.

Said second predetermined motion may in particular be chosen to be a so-called single tap, double tap, triple tap, or any higher number tap, wherein the number of taps is preferably different from the number of taps for the first predetermined motion. For example, a double tap may be used to switch said at least part of the lenses from the first state to the second state, and a triple tap may be used to switch said at least part of the lenses from the second state to the first state.

Alternatively said second predetermined motion may be an angular motion, i.e. a rotation, in particular for example an angular motion around an axis extending parallel to the surface direction of the lenses between the above described two sides of the glasses. A user may rotate his or her glasses around the above described axis when putting away said glasses, thereby indicating that said glasses will not be worn by the user for the coming time. Said predetermined motion may be chosen such that the angular motion that triggers the switch from the second state to the first state is different from an angular motion of a person wearing the glasses and rotating his head downwards or upwards. This embodiment may in particular be advantageous if said first state is a rest state, such that said at least part of the lenses are in their rest state when said glasses is not worn by a user. Said rest state may for example be the rest state of the embodiment described above, in which no voltage is applied to the liquid crystal lens structure of the respective lens. Said angular motion may be detected by said motion sensor, for example said accelerometer. Alternatively a further, different motion sensor may be provided for detecting said angular motion.

Triggering said electronical components to switch said at least part of the respective lens back to the first state may alternatively be achieved by any other suitable way.

For example, said electronical components may be arranged to switch said at least part of the respective lens back to the first state after a predetermined period of time has lapsed, said period of time being suitably chosen, such as for example 10 minutes, 20 minutes, 30 minutes, 40 minutes, 50 minutes, 1 hour, or longer. Such an embodiment is in particular advantageous if said first state is a rest state, such that said at least part of the lenses are automatically switched to their rest state after said period of time has lapsed. Said rest state may for example be the rest state of the embodiment described above, in which no voltage is applied to the liquid crystal lens structure, electro fluidic membrane, or electrochromic lens structure of the respective lens.

As an alternative example, said electronical components may be arranged to switch said at least part of the respective lens back to the first state after a predetermined period of time in which the motion sensors have sensed no motion has lapsed, said period of time being suitably chosen, such as for example 10 minutes, 20 minutes, 30 minutes, 40 minutes, 50 minutes, 1 hour, or longer. Such an embodiment is in particular advantageous if said first state is a rest state, such that said at least part of the lenses are automatically switched to their rest state after said period of time has lapsed. Said rest state may for example be the rest state of the embodiment described above, in which no voltage is applied to the liquid crystal lens, electro fluidic membrane, or electrochromic lens structure structure of the respective lens.

As even another alternative example, if said motion sensor is an accelerometer, said motion sensor may detect an orientation, for example an upside down position, of said ophthalmic frame by detecting the gravitational field. The ophthalmic frame may assume a different orientation, for example an upside down position when not being worn. For example in the upside down position the frame may rest on an upper surface thereof, in particular on an upper side of a lens frame and/or of the temples, and in which upside down position the lenses extend substantially upwards with respect to said upper side of the lens frame. The different orientation, for example the upside down position may thus be indicative of the glasses not being worn, such that said part of the lenses may switch to their first, for example rest, state. In this embodiment said electronical components are arranged to switch said at least part of the respective lens back from the second state to the first state based on said motion sensors detecting a predetermined orientation of said ophthalmic frame. Said rest state may for example be the rest state of the embodiment described above, in which no voltage is applied to the liquid crystal lens structure, electro fluidic membrane, or electrochromic lens structure of the respective lens.

As even another alternative example said ophthalmic frame may comprise at least one further sensor, being a different sensor than said motion sensor, wherein the electronical components and the at least one further sensor are configured to execute said switch from the second state to the first state based on a predetermined characteristic detected by said further sensor. For example, said further sensor may be an angular position sensor, which is able to measure an angular position of said frame and wherein said electronical components and the at least one angular position sensor are configured to execute said switch from the second state to the first state based on a predetermined angular position detected by said further sensor. Said angular position may for example be chosen to be an angular position that the frame assumes when said glasses is not worn by a user, for example when said glasses rests on a surface such as a table or shelf. Such an embodiment is in particular advantageous if said first state is a rest state, such that said at least part of the lenses are in their rest state when said glasses is not worn by a user. As an alternative example, said further sensor may be a Bluetooth sensor, wherein said electronical components and the Bluetooth sensor are configured to execute said switch from the second state to the first state based on a predetermined angular position detected by said Bluetooth sensor. Said rest state may for example be the rest state of the embodiment described above, in which no voltage is applied to the liquid crystal lens structure, electro fluidic membrane, or electrochromic lens structure of the respective lens.

In yet another embodiment of the glasses according to the invention the electronical components and motion sensors are configured to execute said switch of said at least part of the respective lens from the first state to the second state based on a predetermined motion of said ophthalmic frame detected by said motion sensors only when said ophthalmic frame assumes a predetermined angular position.

Said predetermined angular position of said ophthalmic frame may be any suitable, pre-defined angular position or angular position range. The predetermined angular position is thus to be understood throughout this text and claims as either one predetermined angular position or a predetermined angular position range comprising a range of predetermined angular positions.

For example, said predetermined angular position may be chosen to substantially correspond to a use angular position of said glasses. In such an embodiment said at least part of the lenses may only be switched to the second state when said glasses are worn by a user.

Said angular position may for example be defined with respect to the surface direction of the lenses, wherein a zero angle corresponds to a front side of said lenses facing vertically downwards and a 180 degrees angle corresponds to the front side of said lenses facing vertically upwards. The front side is defined here as the side of the lenses facing away from the face of person in use of the glasses, i.e. the side of the lenses facing away from the temples of the glasses. Said predetermined angular position may for example be chosen to be minimally 5 degrees, preferably minimally 10 degrees, even more preferably minimally 15 degrees, even more preferably minimally 20 degrees, even more preferably minimally 25 degrees. Said predetermined angular position may for example be chosen to be maximally 180 degrees, preferably minimally 175 degrees, even more preferably maximally 170 degrees, even more preferably maximally 165 degrees, even more preferably maximally 160 degrees.

Said predetermined angular position may for example be detected by said motion sensor being an accelerometer, or alternatively by a further sensor being an angular position sensor.

In yet another embodiment of the glasses according to the invention said sets of electronical components are arranged to switch said at least part of the respective lens in particular alternatingly between the first and second states in a predetermined pattern.

Such an embodiment may for example be advantageous if said glasses are shooting glasses, in which a user changes his focus from nearby to far away according to a pattern. Said predetermined pattern may be chosen in accordance with this pattern and/or may be user selectable.

Said predetermined pattern may for example be chosen such that said at least part of the lenses assume their first state for a first period of time and their second state for a second period of time, such that said at least part of the lenses are alternatingly in their first and second state. Said first and second period of time may be different or the same. Said first and/or second period of time may for example be minimally 1, 2, 3, 4, or 5 seconds. Said first and/or second period of time may for example be maximally 10, 9, 8, 7, or 6 seconds.

Such a condition in which said electronical components are arranged to switch said at least part of the respective lens between the first and second states in a predetermined pattern may for example be triggered by said motion sensors detecting a third predetermined motion, either being the same as, similar to or different from said first and/or second predetermined motions.

Said third predetermined motion may be any suitable, pre-defined motion or predefined motion range, for example comprising any one or more of the features described above with respect to the first and/or second predetermined motions.

The motions sensors and/or the sets of electronical components may be connected to, carried by, or housed in any suitable part of the ophthalmic frame. For example, the motions sensors and/or the sets of electronical components may be connected to, carried by, or housed in the end pieces to which the temples are connected or in the temples.

The glasses, in particular for example the motion sensors thereof, may be arranged to detect only motions of the frame that are said predetermined motion, such that when a motion is detected that detected motion is per definition said predetermined motion and said switch is executed. Alternatively said glasses, in particular for example the motion sensors of electronical components thereof, may be arranged to detect any motion of the frame and to selectively perform said switch only if said detected motion is said predetermined motion

The glasses, in particular for example the motion sensors and/or electronical components thereof, may for example be arranged such that only if said detected motion exceeds a certain first threshold and/or is below a certain second threshold and/or is equal to a predetermined value that correspond to said predetermined motion said electronical components are arranged to execute said switch. This may for example be achieved by choosing suitable motion sensors that only detect said motion and/or only provide a signal to said electronical components if a motion applied on said frame exceeds said certain first threshold and/or is below said certain second threshold or is equal to said predetermined value. Alternatively or additionally this may for example be achieved by providing suitable filters that only pass signals to said electronical components if a detected motion exceeds said certain first threshold and/or is below said certain second threshold or is equal to said predetermined value. Alternatively or additionally this may for example be achieved by providing suitable software that compares a detected motion with a predetermined motion or range and triggers the electronical components to execute said switch only when said detected motion is equal to said predetermined motion or lies within the predetermined motion range. In other words, the glasses may either comprise suitable hardware and/or software in order to selectively execute the switch based on said predetermined motion of said ophthalmic frame detected by said motion sensors.

Said thresholds may be chosen in accordance with the first and/or second and/or third predetermined motion.

In yet another embodiment of the glasses according to the invention said sets of electronical components may be arranged to switch said at least part of the respective lens or a different part of the respective lens to any desired and/or suitable further state. In this embodiment the electronical components and motion sensors may be configured to execute said switch based on a further predetermined motion of said ophthalmic frame detected by said motion sensors. Said further predetermined motion may be a different, similar, or same motion as the first and/or second motion. Alternatively the electronical components and further sensor may be configured to execute said switch based on a further predetermined characteristic of said ophthalmic frame detected by said further sensor.

In yet another embodiment of the glasses according to the invention said sets of electronical components are arranged to switch said at least part or a different part of the respective lens to a certain state based on a combination of characteristics detected by the motion sensors and/or optional further sensor. In this embodiment said glasses may for example have different operating modes determined by for example an orientation of the frame, wherein a same certain motion applied to the frame in different operating modes results in a switch to different states. For example, a certain first orientation of said frame in combination with a certain motion applied thereto may switch said at least part of the lenses or a different part thereof from any desired state to any desired further state, while in a certain second, different orientation of said frame said same certain motion applied thereto may result in a switch of said at least part of the lenses or a different part thereof from any other, different desired state to any other further, different desired state.

The invention also relates to a method for switching at least part of a pair of lenses of glasses as described in any one or more of the above described embodiments or having any one or more above described features at least from a first state to a second state, comprising the steps of:
(a) applying a motion to the ophthalmic frame of said glasses;
(b) detecting said motion by said motion sensors, and
(c) switching said at least part of the pair of lenses from the first state to the second state if said detected motion is a predetermined motion.

The method may comprise any one or more of the features described with respect to the glasses above.

Steps (b) and (c) may comprise detecting any motion by the motion sensors and only selectively activating the electronical components if said detected motion is said predetermined motion, for example said motion being equal to a predetermined value or lying within a predetermined range. Alternatively or additionally steps (b) and (c) may comprise detecting only a predetermined motion, for example motions that exceed a certain first threshold and/or are below a certain second threshold and/or are equal to a predetermined value that correspond to said predetermined motion, such that when in step (b) a motion is detected that detected motion is per definition said predetermined motion and step (c) is executed and when in step (b) no motion is detected it may be either that said ophthalmic frame is not moved or a motion thereof is not said predetermined motion, for example does not exceed said certain first threshold and/or is not below said certain second threshold and/or is not equal to said predetermined value.

It is noted that step (a) is actively performed by for example a user of said glasses. Steps (b) and (c) are performed by said glasses being suitably configured therefor.

In an embodiment of the method according to the invention step (a) is performed by applying a single, double or triple tap to the ophthalmic frame of said glasses.

Said single, double or triple tap may for example be applied to said glasses by one or more fingers or by a hand of a person wearing said glasses. Said single, double or triple tap may for example be applied to substantially one point or area of said glasses. Said one point or area may be located at one out of two sides of the glasses, said two sides being for example defined at opposite sides of the two lenses, i.e. such that both lenses extend between the two sides as seen in a surface direction of the lenses. Such one point or area may for example be a part of a temple of the frame or part of an end piece of said frame to which said temple is connected. In such an embodiment the single, double or triple tap is preferably applied substantially parallel to the surface direction of the lenses substantially in the direction of the other side. Alternatively said one point or area may be a central area between said two sides, for example a bridge area of said frame. In such an embodiment the single, double or triple tap is preferably applied substantially orthogonal to the surface direction of the lenses. It is noted that any number of taps may be used, in particular also higher number taps, but that a single, double or triple tap is particularly suitable as it is less prone to errors in keeping track of the number of taps by a user.

In another embodiment of the method according to the invention step, said method comprises the further steps of, to be performed after step (c):
(d) applying a motion to the ophthalmic frame of said glasses or rotating said ophthalmic frame to a predetermined orientation;
(e) detecting said motion by said motion sensors, and
(f) switching said at least part of the pair of lenses back from the second state to the first state if said detected motion is a second predetermined second motion or if said ophthalmic frame assumes said predetermined orientation.

Steps (e) and (f) may comprise detecting any motion or orientation by the motion sensors and only selectively activating the electronical components if said detected motion is said second predetermined motion or predetermined orientation, for example said motion or orientation being equal to a predetermined value or lying within a predetermined range. Alternatively or additionally steps (e) and (f) may comprise detecting only a second predetermined motion or predetermined orientation, for example motions or orientations that exceed a certain third threshold and/or are below a certain fourth threshold and/or are equal to a predetermined value that correspond to said second predetermined motion or said predetermined orientation, such that when in step (e) a motion or orientation is detected that detected motion or orientation is per definition said second predetermined motion or said predetermined orientation and step (f) is executed and when in step (e) no motion or orientation is detected it may be either that said ophthalmic frame is not moved or a motion or orientation thereof is not said second predetermined motion or predetermined orientation, for example does not exceed said certain third threshold and/or is not below said certain fourth threshold and/or is not equal to said predetermined value.

It is noted that step (d) is actively performed by for example a user of said glasses. Steps (e) and (f) are performed by said glasses being suitably configured therefor.

Said motions applied in steps (a) and (d) may be different, similar, or the same motions.

In an embodiment of the method according to the invention step (d) is performed by applying a single, double or triple tap to the ophthalmic frame of said glasses, wherein the number of taps is preferably different from the number of taps applied in step (a). For example, a double tap may be used to switch said at least part of the lenses from the first state to the second state, i.e.step (a), and a triple tap may be used to switch said at least part of the lenses from the second state to the first state, i.e. step (d).

It is noted that, as described above, switching said at least part of the pair of lenses back from the second state to the first state may alternatively be achieved by any other suitable way. In such an embodiment the user may perform an action to be detected by said further sensor, or the glasses may be arranged to switch said at least part of the pair of lenses back from the second state to the first state after a predetermined period of time has lapsed, or after a predetermined period of time in which the motion sensors have sensed no motion has lapsed.

The invention also relates to a method for switching at least part of a pair of lenses of glasses as described in any one or more of the above described embodiments or having any one or more above described features between a first state and a second state, comprising the steps of:
(g) applying a motion to the ophthalmic frame of said glasses;
(h) detecting said motion by said motion sensors, and
(i) switching said at least part of the pair of lenses alternatingly between the first state and the second state if said detected motion is a third predetermined motion.

The method may comprise any one or more of the features described with respect to the glasses above.

Steps (h) and i) may comprise detecting any motion by the motion sensors and only selectively activating the electronical components if said detected motion is said third predetermined motion, for example said motion being equal to a predetermined value or lying within a predetermined range. Alternatively or additionally steps (h) and (i) may comprise detecting only a third predetermined motion, for example motions that exceed a certain fifth threshold and/or are below a certain sixth threshold and/or are equal to a predetermined value that correspond to said predetermined motion, such that when in step (h) a motion is detected that detected motion is per definition said predetermined motion and step (i) is executed and when in step (h) no motion is detected it may be either that said ophthalmic frame is not moved or a motion thereof is not said predetermined motion, for example does not exceed said certain fifth threshold and/or is not below said certain sixth threshold and/or is not equal to said predetermined value.

It is noted that step (g) is actively performed by for example a user of said glasses. Steps (h) and (i) are performed by said glasses being suitably configured therefor.

The motion applied to the frame in step (g) is preferably different from the motion applied to the frame in step (a) and/or different from the motion applied to the frame in step (d). The user may thereby use the glasses according to the invention selectively by applying a suitable motion to the frame.

It is noted that where throughout this text and claims first and/or second and/or third and/or fourth and/or fifth and/or sixth are used for indicating for example the predetermined motions or thresholds, these are only provided for sake of clarity in order to be able to distinguish between various motions and/or thresholds and not by any means limiting. For example, the first predetermined motion may be the only motion. For example, the third predetermined motion may be the only other predetermined motion apart from the one or first predetermined motion, not requiring the second predetermined motion.

The invention will now be described in more details with respect to the drawings illustrating some preferred embodiments of the invention. In the drawings:
figure 1 is a schematic perspective view of a first embodiment of the glasses according to the invention;
figure 2 is a schematic perspective view of person wearing the glasses of figure 1, and
figure 3 is a block diagram showing the method steps of switching the lenses of the glasses of figure 1 from a first state to a second state.

In the drawings a same reference number has been allocated to a same or analogous element.

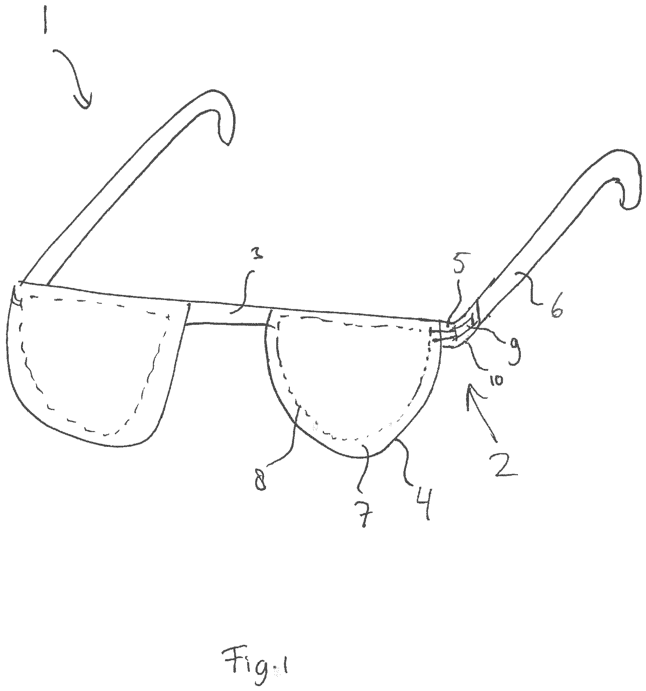

Figure 1 shows glasses 1, comprising an ophthalmic frame 2. In this embodiment the frame 2 comprises a bridge 3, lens frames 4 with end pieces 5, and temples 6 connected to the end pieces 5. The temples 6 may for example be connected to the end pieces 5 via a hinge (not shown). The end pieces 5 may form an integral part of the lens frames 4 or may be connected thereto. The end pieces 5 are arranged at opposing sides of the lens frames 4 at the side of temples 6. The lens frames 4 hold lenses 7. In this embodiment each lens 7 comprises a liquid crystal lens structure 8 that is activatable at least from a first state to a second state by applying a voltage thereto. It is noted that instead of a liquid crystal lens structure any desired structure or combination thereof may be used. In this embodiment said liquid crystal lens structure 8 cooperates with a Fresnel lens also provided in said lens 7, thereby providing a lens 7 with different refractive indices in the first and second state thereof. In this embodiment each end piece 5 houses a set of electronical components, a voltage source and a motion sensor, denoted in figure 1 by box 9, which are connected to the liquid crystal lens structure 8 via connections 10. The connections 10, electronical components, voltage source and motion sensor may be or may not be visible from the outside of the frame 2. A motion of the ophthalmic frame may be detected by the motion sensors in each end piece 5 substantially simultaneously. If said motion detected by the motion sensors is a predetermined motion the respective electronical components will activate the respective liquid crystal lens structure 8 by applying a voltage from the voltage source thereto from the first state to the second state. The set of electronical components and motion sensor are thus arranged to execute a switch of at least a part of the respective lens 7 at least from a first state to a second state based on a predetermined motion of said ophthalmic frame 2 detected by said motion sensor.

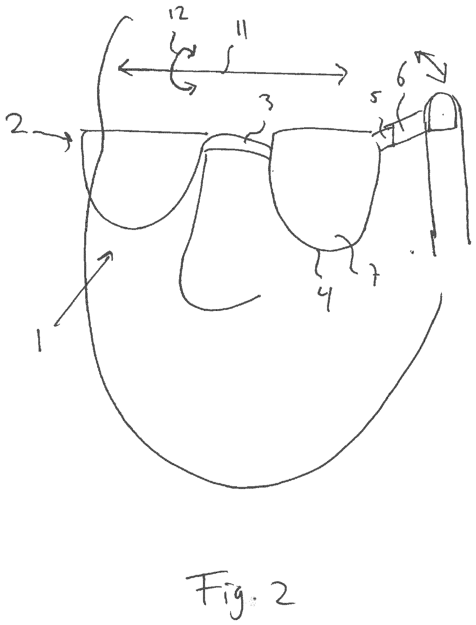

Figure 2 shows a person wearing the glasses 1 of figure 1. Said person may for example double tap the side, for example the temples 6 or end pieces 5, of the frame 2 with one or more fingers, as a result of which double tap the frame 2 undergoes a motion. The glasses 1 of figure 1 is in this embodiment embodied such that the double tap is detected as the predetermined motion by the motion sensors, such that the lens 7 is switched from the first state to the second state. The side of the frame 2 on which said person applies said tap is one out of two sides of the glasses, said two sides defined here at opposite sides of the two lenses 7, i.e. such that both lenses 7 extend between the two sides as seen in a surface direction 11 of the lenses. The tap is applied here in the direction of the other side of the two sides, i.e. parallel to the surface direction 11.

Glasses 1 may be arranged to switch said lenses 7 back to the first state, for example after a certain time period has lapsed, or for example after a certain time period in which said frame 2 has not moved has lapsed, or for example if said motion sensors detect a further motion being a second predetermined motion, for example a triple tap to the side of the glasses 2, or for example if said motion sensors detect a predetermined orientation of said ophthalmic frame, or for example if a further sensor provided for this purpose detects a certain characteristic.

Glasses 1 may be arranged such that the electronical components and motion sensors are configured to execute said switch of said at least part of the respective lens 7 from the first state to the second state based on said predetermined motion of said ophthalmic frame 2 detected by said motion sensors only when said ophthalmic frame assumes a predetermined angular position. This predetermined angular position may be an angular position that lies within a range of angles normally assumed by said frame 2 when a person wears said glasses. Said predetermined angular position may be defined with respect to the surface direction 11, wherein a zero angle corresponds to a front side of said lenses 7 facing vertically downwards and a 180 degrees angle corresponds to the front side of said lenses facing vertically upwards and wherein the frame 2 can thus be seen to rotate from approximately 0 degrees to 180 degrees in a rotational direction 12 around direction 11 and can assume any angular position between 0 and 180 degrees. In figure 2 the frame 2 assumes an angular position of approximately 90 degrees, which is an angular position that lies within said range.

Glasses 1 may be arranged to alternatingly switch between the first and second state after a motion is applied to the frame that is detected as a third predetermined motion.

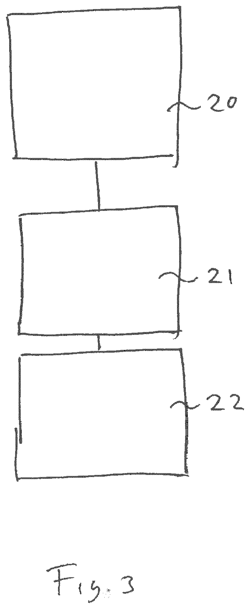

Figure 3 shows the method steps of switching the lenses of the glasses of figure 1 from a first state to a second state. In step 20 a user, preferably wearing the glasses 1 or preferably at least holding the glasses 1, applies a motion to the ophthalmic frame of said glasses, for example said above described double tap. In step 21 the motion of the ophthalmic frame is detected. Step 22 is performed only when said detected motion is said predetermined motion, in which step 22 said at least part of the pair of lenses are switched from the first state to the second state.

Steps 21 and 22 may be performed by detecting any motion by the motion sensors and only selectively activating the electronical components if said detected motion is said predetermined motion. Alternatively step 21 may be performed by detecting only motions that are said predetermined motion, such that if a motion is detected in step 21, step 22 is by definition performed because the detected motion is by definition the predetermined motion.

It is noted that the invention is not limited to the shown embodiments but also extends to variants within the scope of the appended claims.

## Claims

1. Glasses comprising an ophthalmic frame for holding a pair of lenses, the ophthalmic frame comprising two sets of electronical components, each set being connected to a closest lens of the pair of lenses to switch at least a part of the respective lens at least from a first state to a second state, **characterized in that** the ophthalmic frame further comprises two motion sensors, each motion sensor being connected to a respective set of electronical components, wherein the electronical components and motion sensors are configured to execute said switch based on a predetermined motion of said ophthalmic frame detected by said motion sensors.

2. Glasses according to claim 1, wherein said predetermined motion is a predetermined motion pattern.

3. Glasses according to claim 2, wherein said predetermined motion pattern comprises a single, double or triple tap.

4. Glasses according to any of the preceding claims, wherein said motion sensors are chosen from the group comprising accelerometers and gyroscopes.

5. Glasses according to any of the preceding claims, wherein said ophthalmic frame further comprises two voltage sources, each being assigned to a respective set of electronical components, wherein each of said lenses comprises at least one of a liquid crystal lens structure, an electro fluidic membrane and an electrochromic lens structure connected to a respective voltage source, and wherein said first state is a state in which no voltage is applied to the at least one of the liquid crystal lens structure, the electro fluidic membrane and the electrochromic lens structure of the respective lens.

6. Glasses according to any of the preceding claims, wherein said sets of electronical components are arranged to switch said at least part of the respective lens back from the second state to the first state.

7. Glasses according to claim 6, wherein said sets of electronical components are arranged to switch said at least part of the respective lens back from the second state to the first state based on any one or more of the following:
- said motion sensors detecting a second predetermined motion or a predetermined orientation;
- a predetermined period of time having lapsed;
- a predetermined period of time in which the motion sensors have sensed no motion having lapsed; and
- a predetermined characteristic detected by a further sensor, said further sensor being comprised by said ophthalmic frame and said further sensor being a different sensor than said motion sensor.

8. Glasses according to any of the preceding claims, wherein the electronical components and motion sensors are configured to execute said switch of said at least part of the respective lens from the first state to the second state based on a predetermined motion of said ophthalmic frame detected by said motion sensors only when said ophthalmic frame assumes a predetermined angular position.

9. Glasses according to any of the preceding claims, wherein said sets of electronical components are arranged to switch said at least part of the respective lens between the first and second states in a predetermined pattern.

10. Method for switching at least part of a pair of lenses of glasses according to any of the preceding claims 1 - 9 at least from a first state to a second state, comprising the steps of:
(a) applying a motion to the ophthalmic frame of said glasses;
(b) detecting said motion by said motion sensors, and
(c) switching said at least part of the pair of lenses from the first state to the second state if said detected motion is a predetermined motion.

11. Method according to claim 10, wherein step (a) is performed by applying a single, double or triple tap to the ophthalmic frame of said glasses.

12. Method according to claim 10 or 11, further comprising the steps of, to be performed after step (c):
(d) applying a motion to the ophthalmic frame of said glasses or rotating said ophthalmic frame to a predetermined orientation;
(e) detecting said motion or orientation by said motion sensors, and
(f) switching said at least part of the pair of lenses back from the second state to the first state if said detected motion is a predetermined second motion or if said ophthalmic frame assumes said predetermined orientation.

13. Method according to claims 11 and 12, wherein step (d) is performed by applying a single, double or triple tap to the ophthalmic frame of said glasses, the number of taps being different from step (a).

14. Method for switching at least part of a pair of lenses of glasses according to claim 9 between a first state and a second state, comprising the steps of:
(g) applying a motion to the ophthalmic frame of said glasses;
(h) detecting said motion by said motion sensors, and
(i) switching said at least part of the pair of lenses alternatingly between the first state and the second state if said detected motion is a third predetermined motion.
